(19) Europäisches Patentamt
European Patent Office
Office européen des brevets

(11) Numéro de publication: **0 223 635**
**A1**

# (12) DEMANDE DE BREVET EUROPEEN

(21) Numéro de dépôt: **86402133.2**

(22) Date de dépôt: **30.09.86**

(51) Int. Cl.4: **C 07 C 69/34**
C 09 K 19/30

(30) Priorité: **02.10.85 FR 8514621**

(43) Date de publication de la demande:
**27.05.87 Bulletin 87/22**

(84) Etats contractants désignés: **CH DE GB LI**

(71) Demandeur: **COMMISSARIAT A L'ENERGIE ATOMIQUE**
**31/33, rue de la Fédération**
**F-75015 Paris (FR)**

(72) Inventeur: **Giroud, Anne-Marie**
**3, Chemin de l'Eglise**
**F-38700 La Tronche (FR)**

(74) Mandataire: **Mongrédien, André et al**
**c/o BREVATOME 25, rue de Ponthieu**
**F-75008 Paris (FR)**

## (54) Dicarboxylates de phénylcyclohexyle et leur procédé de préparation.

(57) L'invention a pour objet de nouveaux dicarboxylates de phénylcyclohexyle, utilisables comme cristaux liquides ou pour améliorer les propriétés élastiques des cristaux liquides nématiques.

Ces composés répondent à la formule (I)

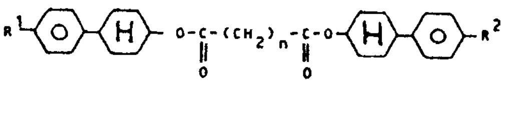

(I)

dans laquelle $R^1$ et $R^2$ qui peuvent être identiques ou différents, représentent un atome d'hydrogène ou un radical alkyle ayant de 1 à 12 atomes de carbone et n est un nombre entier allant de 2 à 16.

Ils peuvent être préparés par réaction du diacide de formule $HOOC(CH_2)_n$-COOH avec les phénylcyclohexanols substitués correspondants.

EP 0 223 635 A1

**Description**

DICARBOXYLATES DE PHENYLCYCLOHEXYLE ET LEUR PROCEDE DE PREPARATION.

La présente invention a pour objet de nouveaux composés du type dicarboxylate de phénylcyclohexyle et leur procédé de préparation.

De façon plus précise, elle concerne la réalisation de nouveaux cristaux liquides ou de composés non mésomorphes capables d'améliorer le comportement élastique de cristaux liquides nématiques, utilisables dans des dispositifs mettant en jeu l'effet de biréfringence contrôlé électriquement.

Cet effet correspond à une déformation sous champ électrique d'une phase nématique à anisotropie diélectrique $\Delta\varepsilon$ négative, $\Delta\varepsilon$ représentant la différence entre la constante diélectrique $\varepsilon_a$ parallèle au grand axe moléculaire du cristal et la constante diélectrique $\varepsilon_b$ perpendiculaire à ce grand axe.

Dans les dispositifs à cristaux liquides, il est nécessaire d'utiliser des matériaux nématiques permettant un taux élevé de multiplexage, c'est-à-dire un nombre important de lignes de l'écran adressables électriquement afin de visualiser un haut taux d'informations. Ce taux de multiplexage k peut s'exprimer en fonction de la tension appliquée aux bornes du dispositif (V) et de la tension de seuil de déformation du cristal ($V_S$) par la formule :

$$k < \left( \frac{V^2 + V_S^2}{V^2 - V_S^2} \right)^2$$

Pour un taux de multiplexage donné, il est nécessaire d'avoir un angle de basculement moléculaire ($\varphi_M$) au centre de la cellule à cristaux liquides le plus grand possible pour obtenir le meilleur contraste entre les deux états noir et blanc du cristal sous l'action du champ électrique. Pour de faibles angles de basculement $\varphi_M$ est directement liée à la tension de seuil de déformation du cristal $V_S$ et au rapport des constantes élastiques de flexion $K_{33}$ et d'éventail $K_{11}$ du cristal liquide. En effet, $\varphi_M$ est donné par la formule :

$$\Phi_M = \frac{V^2 - V_S^2}{V^2 \left(\frac{2}{3} + \left|\frac{\Delta\varepsilon}{\varepsilon_{\perp}}\right| - \eta_{31} V_S^2\right.}$$

avec $V_S = 2\pi \sqrt{\frac{\pi K_{33}}{\Delta\varepsilon}}$

$\Delta\varepsilon = \varepsilon_a - \varepsilon_b$

dans laquelle $\eta_{31} = \frac{1 - K_{33}}{K_{11}}$

Dans ces conditions, la biréfringence induite électriquement est alors de la forme:

$$\Delta n = \left( \frac{\sin^2\Phi}{n_o^2} + \frac{\cos^2\Phi}{n_e^2} \right)^{1/2} - n_0$$

avec $\Phi \simeq \Phi_M \cos\frac{\pi}{e} Z$

dans laquelle $n_e$ et $n_o$ sont les indices extraordinaire et ordinaire du cristal, e l'épaisseur du cristal liquide et Z sa position dans la cellule.

L'intensité relative transmise par le dispositif à cristal liquide entre deux polariseurs croisés est donnée par la relation :

$$\frac{I}{I_0} = \sin^2 \pi \frac{\Delta n \, e}{\lambda}$$

dans laquelle $\Delta n$ est égal à $n_e$-$n_o$, et $\lambda$ est la longueur d'onde du faisceau lumineux éclairant le dispositif. Il en résulte que les paramètres les plus importants du matériau sont,

$$\frac{K_{33}}{K_{11}}$$

$\Delta n$, $\Delta \varepsilon$ ainsi que la gamme de mésomorphisme $\Delta T$ du cristal.

Parmi ces paramètres, le rapport $K_{33}/K_{11}$ joue un rôle important, car il détermine la raideur de la pente de la courbe de transfert électrooptique et donc la multiplexabilité du matériau utilisé ; aussi, ce rapport doit être le plus grand possible.

La présente invention a précisément pour objet de nouveaux composés qui peuvent présenter une phase cristal liquide ou être ajoutés à un cristal liquide nématique pour modifier le comportement élastique de ce cristal en améliorant la valeur du rapport $K_{33}/K_{11}$.

Les composés de l'invention répondent à la formule :

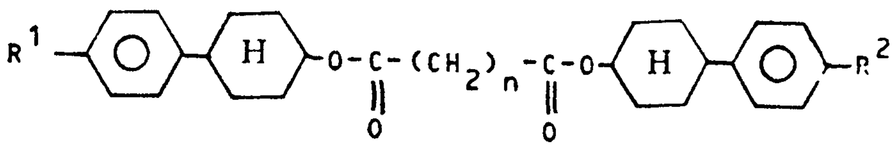 (I)

dans laquelle $R^1$ et $R^2$ qui peuvent être identiques ou différents représentent un atome d'hydrogène ou un radical alkyle ayant de 1 à 12 atomes de carbone et n est un nombre entier allant de 2 à 16.

Ces composés comportent des parties rigides

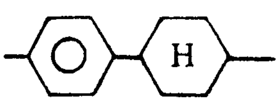

ayant une structure voisine de celle de cristaux liquides nématiques utilisables pour l'affichage et ces parties rigides sont rattachées entre elles par une chaîne alkyle flexible, ce qui permet d'associer de tels composés lorsqu'ils sont mésomorphes, à des cristaux liquides afin de modifier le comportement élastique de ces derniers.

Les composés répondant à la formule I peuvent également se présenter sous la forme de cristaux liquides, par exemple de cristaux liquides smectiques et trouver ainsi d'autres utilisations.

La présente invention a également pour objet un procédé de préparation des composés répondant à la formule I précitée.

Ce procédé consiste à faire réagir un diacide de formule $HOOC-(CH_2)_n-COOH$ dans laquelle n est un nombre entier de 2 à 16 avec un phénylcyclohexanol de formule

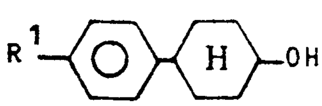

et/ou de formule 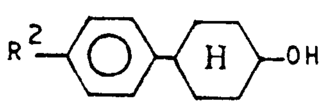

dans lesquelles $R^1$ et $R^2$ sont un atome d'hydrogène ou un radical alkyle de 1 à 12 atomes de carbone.

Lorsque $R^1$ et/ou $R^2$ représentent un atome d'hydrogène, on part de la phénylcyclohexanone que l'on réduit en phénylcyclohexanol par action d'hydrure de lithium et d'aluminium $LiAlH_4$ en présence d'éther.

Lorsque $R^1$ et/ou $R^2$ sont des radicaux alkyle de formule $C_mH_{2m+1}$ avec m étant un nombre entier de 2 à 11, on prépare les phénylcyclohexanols substitués correspondants en partant du phénylcyclohexanol que l'on traite par l'anhydride acétique pour obtenir l'ester acétique de phénylcyclohexanol de formule :

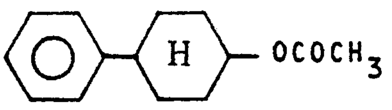

puis l'on traite cet ester acétique du phénylcyclohexanol par le chlorure d'acide de formules $R'^1COCl$ et/ou $R'^2COCl$ dans lesquelles $R'^1$ et $R'^2$ sont des radicaux de formule $C_{m-1}H_{2m}$ avec m ayant la signification donnée ci-dessus, pour obtenir le composé de formule suivante :

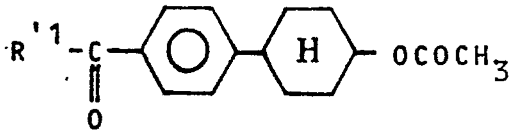 ou 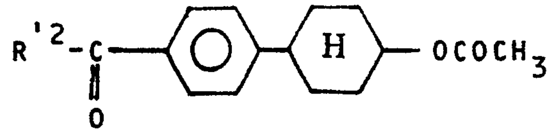

en réalisant cette réaction dans le dichlorométhane en présence de chlorure d'aluminium.

Le composé ainsi obtenu est ensuite traité par la soude pour le transformer en alkylcarbonyl phénylcyclohexanol de formule :

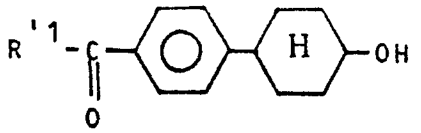 ou 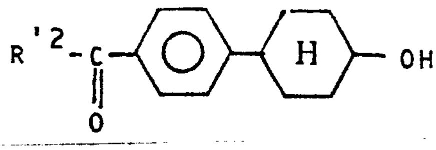

que l'on réduit ensuite par l'hydrazine en présence de diéthylène glycol et de potasse pour obtenir les phénylcyclohexanols correspondants de formule :

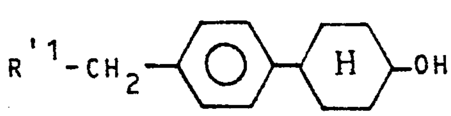 ou 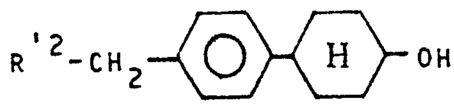

On fait réagir ensuite ces phénylcyclohexanols avec le diacide correspondant par condensation à la température ambiante en utilisant la méthode de Hassner (Tetrahedron Letters, Vol. 46, 4475, 1978), dans laquelle 1 mole du diacide, du N, N-dicyclohexylcarbodiimide et de la 4-pyrrolidino pyridine dans du dichlorométhane est ajoutée à 2 moles du ou des phénylcyclohexanols appropriés.

Lorsque l'on utilise deux phénylcyclohexanols de formule :

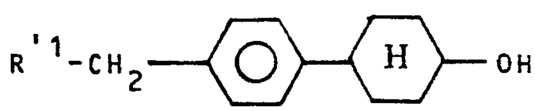 et 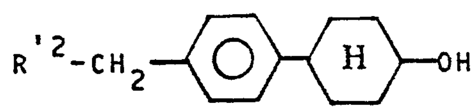

il est nécessaire de séparer ensuite les différents composés présents dans le mélange réactionnel afin d'isoler le composé de formule (I) :

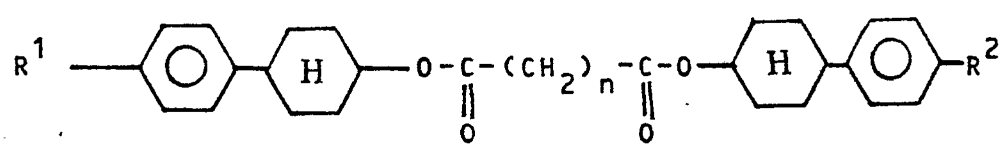 (I)

et ceci peut être effectué par des méthodes classiques.

Aussi, on utilise de préférence un seul cyclohexanol, et le composé obtenu est un composé de formule (I) dans laquelle $R^1$ et $R^2$ sont identiques.

D'autres caractéristiques et avantages de l'invention apparaitront mieux à la lecture des exemples suivants donnés bien entendu à titre illustratif et non limitatif.

<u>Exemples</u> 1 et 2

Ces exemples illustrent la préparation des composés de formule

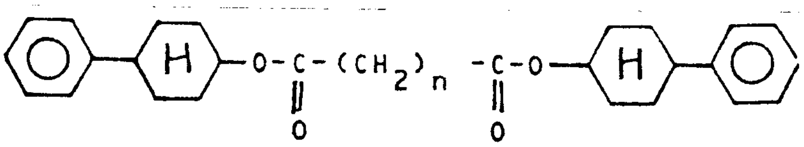

dans laquelle n = 10 et n = 14.

On part du phénylcyclohexanol qui est formé par réduction de la phénylcyclohexanone par l'hydrure de lithium et d'aluminium en présence d'éther. On fait réagir ensuite le phénylcyclohexanol avec le diacide de formule : $HOOC-(CH_2)_{10}-COOH$ en dissolvant dans du dichloroéthane une mole du diacide, du N, N-dicyclohexylcarbodiimide et de la 4-pyrrolidino pyrridine, puis on ajoute cette solution à 2 moles de phénylcyclohexanol. On obtient ainsi le diester de formule :

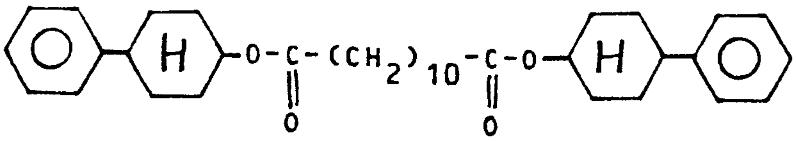

(composé n°1)

qui a un point de fusion de 96°C.

On utilise le même mode opératoire pour préparer le composé n°2 de formule :

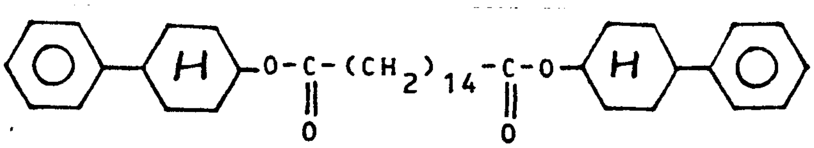

en utilisant comme diacide, le diacide de formule $HOOC-(CH_2)_{14}-COOH$.

Exemples 3 à 10

Préparation des composés de formule I dans laquelle $R^1$ et $R^2$ représentent tous deux un radical alkyle. On forme tout d'abord le phénylcyclohexanol de formule :

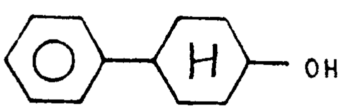

en réduisant au moyen d'hydrure de lithium et d'aluminium la phénylcyclohexanone en présence d'éther. On soumet ensuite le phénylcyclohexanol à une réaction d'acétylation par l'anhydride acétique, puis on le transforme en trans-4-alcanoylbenzyl-1-acétoxycyclohexanone par une réaction de Friedel-Craft avec le chlorure d'acide approprié dans du dichlorométhane en présence de trichlorure d'aluminium selon le schéma réactionnel suivant :

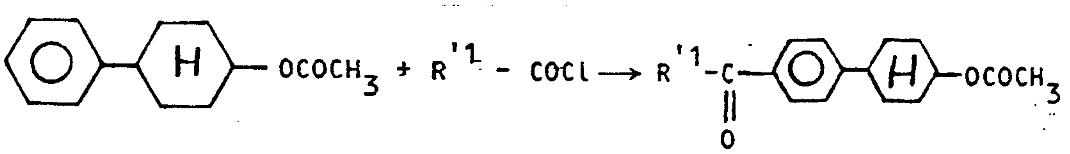

On saponifie ensuite l'ester par de l'hydroxyde de sodium dans du méthanol afin d'obtenir le composé suivant :

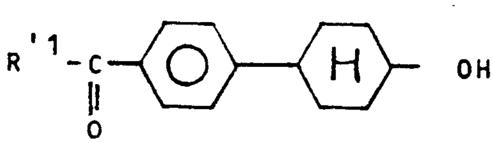

qui est transformé par réduction du groupe cétone en phényl cyclohexanol substitué de formule :

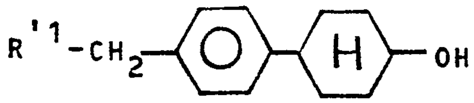

dans laquelle $R'^{1}-CH_2$ représente le radical $R_1$ ou $R_2$. Cette réduction est effectuée par la réaction de Wolff Kishner en utilisant le monohydrate d'hydrazine dans du diéthylène glycol. On fait réagir ensuite ce phénylcy clohexanol substitué avec une mole du diacide de formule $HOOC-(CH_2)_n-COOH$ en ajoutant 2 moles du trans-4-alkyl-1-phénylcyclohexanol à une mole du diacide, du N,N-dicyclohexylcarbodiimide et de la 4-pyrrolidino pyrridine dans du dichlorométhane. En suivant ce mode opératoire, on a préparé les composés n°3 à 10 du Tableau 1.

On vérifie les propriétés des composés ainsi obtenus en les étudiant avec un calorimètre et en les observant avec un microscope polarisant. Les températures de transition et les changements d'enthalpie molaire sont donnés dans le Tableau II.

Au vu des résultats de ce Tableau, on constate que seul le composé n°6 présente une mésophase stable à 107°C.

Une analyse par diffraction X de ce composé indique une phase smectique hautement organisée.

Les composés non mésomorphes de l'invention peuvent être utilisés en mélange avec des cristaux liquides tels que les 1-(alkylcyclohexyl)-2-(alkylfluorobiphénylyl) éthane pour augmenter le rapport $K_{33}/K_{11}$ de tels composés. Ainsi un mélange de 1-(trans-4-n-éthylcyclohexyl)-2-[2'-fluoro-4'-(2-éthyl)-4-biphénylyl] éthane $I_{22}$ et du composé n°1 contenant 4,91 % en poids du composé n°1 présente un rapport $K_{33}/K_{11}$ de 1,72, alors que le composé $I_{22}$ seul présente un rapport $K_{33}/K_{11}$ de 1,2.

TABLEAU 1

| COMPOSE | $R^1 = R^2$ | n |
|---|---|---|
| 1 CODDACO | H | 10 |
| 2 COHDACO | H | 14 |
| 3 C5DDAC5 | $C_5H_{11}$ | 10 |
| 4 C6DDAC6 | $C_6H_{13}$ | 10 |
| 5 C7DDAC7 | $C_7H_{15}$ | 10 |
| 6 C9DDAC9 | $C_9H_{19}$ | 10 |
| 7 C5HDAC5 | $C_5H_{11}$ | 14 |
| 8 C6HDAC6 | $C_6H_{13}$ | 14 |
| 9 C7HDAC7 | $C_7H_{15}$ | 14 |
| 10 C9HDAC9 | $C_9H_{19}$ | 14 |

TABLEAU 2

| COMPOSES | Chauffage<br>Températures de transition °C $T_{KI}$ ou $T_{KM}$ | | Refroidissement<br>Températures de transition °C | |
|---|---|---|---|---|
| 1 $C_0$-DDA-$C_0$ | 96 | [18,6] | | |
| 3 $C_5$-DDA-$C_5$ | 98 | [20,3] | 91 | |
| 4 $C_6$-DDA-$C_6$ | 103 | [16,71] | 95,6 | [-17,9] |
| 5 $C_7$-DDA-$C_7$ | 101,6 | [16,7] | 96 | [-15,5] |
| 6 $C_9$-DDA-$C_9$ | 107 | [19] | 101 smectique | [- 6,1] |
| | | | 96 | [-11,3] |
| 7 $C_5$-HDA-$C_5$ | 115 | [25,3] | 108,6 | [-24,5] |
| 8 $C_6$-HDA-$C_6$ | 107,6 | [20,3] | 100,6 | [-18,7] |
| 9 $C_7$-HDA-$C_7$ | 105,8 | [20,3] | 99,6 | [-17,8] |
| 10 $C_9$-HDA-$C_9$ | 107,2 | [21,8] | 100,4 | [-21,9] |

[ ] = Δ H en cal/gr.

**Revendications**

1. Composé caractérisé en ce qu'il répond à la formule :

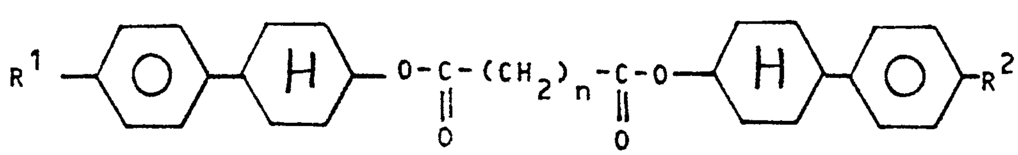 (I)

dans laquelle $R^1$ et $R^2$ qui peuvent être identiques ou différents, représentent un atome d'hydrogène ou un radical alkyle ayant de 1 à 12 atomes de carbone et n est un nombre entier allant de 2 à 16.

2. Composé selon la revendication 1, caractérisé en ce que $R^1$ et $R^2$ sont identiques.

3. Composé selon l'une quelconque des revendications 1 et 2, caractérisé en ce que $n = 10$ ou 14.

4. Composé selon l'une quelconque des revendications 2 et 3, caractérisé en ce que $R^1$ et $R^2$

représentent un atome d'hydrogène ou un radical pentyle, hexyle, heptyle ou nonyle.

5. Procédé de préparation d'un composé répondant à la formule :

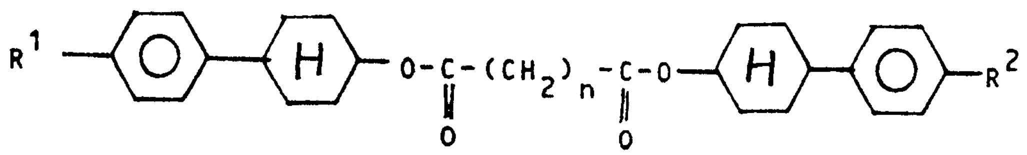 (I)

dans laquelle $R^1$ et $R^2$ qui peuvent être identiques ou différents, représentent un atome d'hydrogène ou un radical alkyle ayant de 1 à 12 atomes de carbone, et n est un nombre entier allant de 2 à 16, caractérisé en ce que l'on fait réagir un diacide de formule $HOOC-(CH_2)_n-COOH$ avec un phénylcyclohexanol de formule :

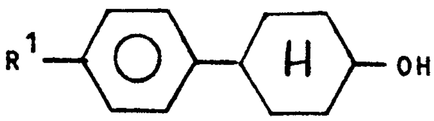

et/ou de formule 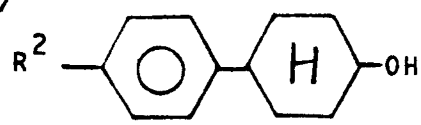

dans lesquelles $R^1$ et $R^2$ ont la signification donnée cidessus.

6. Procédé selon la revendication 5, caractérisé en ce que le phénylcyclohexanol répond à la formule

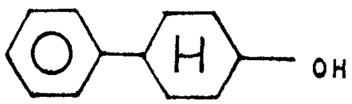

et en ce qu'il est préparé par réduction de la phénylcyclohexanone.

7. Procédé selon la revendication 5, caractérisé en ce que le phénylcyclohexanol répond à la formule

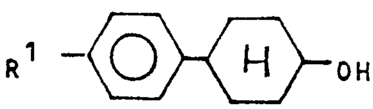

dans laquelle $R^1$ est un radical alkyle de formule $C_mH_{2m+1}$ avec m étant un nombre entier de 2 à 11, et en ce que l'on prépare ce phényl cyclohexanol substitué à partir de phénylcyclohexanol, en réalisant les étapes suivantes :

a) traitement du phénylcyclohexanol par l'acide acétique pour obtenir l'ester de formule :

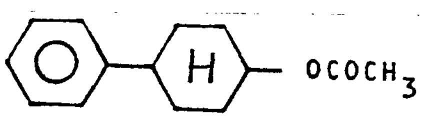

b) traitement de cet ester par le chlorure d'acide de formule $R'^1COCl$ dans laquelle $R'^1$ est un radical de formule $C_{m-1}H_{2m}$ avec m ayant la signification donnée ci-dessus, pour obtenir le composé de formule :

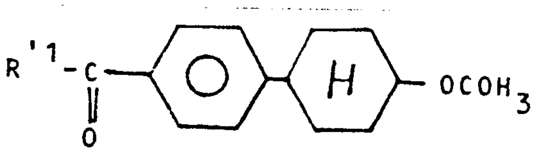

c) traitement du composé obtenu par la soude pour le transformer en alkylcarbonylphénylcyclohe-

xanol de formule :

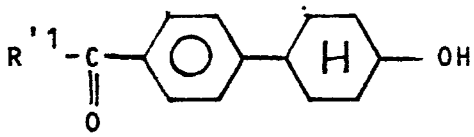

d) réduction de cet alkylcarbonylphénylcyclohexanol pour obtenir le phénylcyclohexanol substitué de formule :

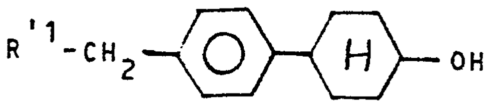

Office européen des brevets

# RAPPORT DE RECHERCHE EUROPEENNE

Numero de la demande

EP 86 40 2133

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | CHEMICAL ABSTRACTS, vol. 102, no. 25, 24 juin 1985, page 565, résumé no. 220581e, Columbus, Ohio, US; & JP-A-60 28 952 (CHISSO CORP.) 14-02-1985 * Résumé * --- | 1 | C 07 C 69/34<br>C 09 K 19/30 |
| P,X | CHEMICAL ABSTRACTS, vol. 105, no. 41, 1986, page 619, résumé no. 33321v, Columbus, Ohio, US; M.M.GAUTHIER: "Synthesis and properties of model compounds containing a cyclohexyl group in the mesogenic moiety", & MOL. CRYST. LIQ. CRYST., LETT. SECT. 1986, 3(5), 139-45 * Résumé * ----- | 1-7 | |

DOMAINES TECHNIQUES RECHERCHES (Int Cl 4)

C 07 C 69/00
C 09 K 19/00

Le present rapport de recherche a ete etabli pour toutes les revendications

| Lieu de la recherche | Date d'achevement de la recherche | Examinateur |
|---|---|---|
| LA HAYE | 21-01-1987 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe a la base de l invention
E : document de brevet antérieur, mais publié a la date de dépôt ou apres cette date
D : cité dans la demande
L : cite pour d'autres raisons

& : membre de la même famille, document correspondant

OEB Form 1503 03 82